# EUROPEAN PATENT APPLICATION

(11) **EP 4 134 218 A1**
(43) Date of publication of application: **15.02.2023**
(21) Application number: 22189552.7
(22) Date of filing: 09.08.2022
(51) Int. Cl.: B29B 17/00, B29L 7/00

(54) **PROCESS FOR RECYCLING AGRI-PLASTIC WASTE**

(30) Priority: 11.08.2021 IL 28555221
(71) Applicant: Roded Recycling Industries Ltd, 7179902 Modi'in-Macabim-Reut (IL)
(72) Inventor: Weisberger, Petachia, 6993725 Tel Aviv (IL)
(74) Representative: Tautz & Schuhmacher

(57) **Abstract**

The disclosure concerns processes for recycling polymeric waste into constructional products. More specifically, the disclosure concerns processes for recycling low melt flow index (MFI) raw agri-plastic waste, such as polyethylene and/or polypropylene sheets, into high-strength products suitable for applications in constructions, e.g. as industrial floor panels or cargo pallets.

## Description

### TECHNOLOGICAL FIELD

The present disclosure concerns processes for recycling polymeric waste into constructional products. More specifically, the disclosure concerns processes for recycling low melt flow index (MFI) raw agri-plastic waste, such as polyethylene and/or polypropylene sheets, into high-strength products suitable for applications in constructions, e.g. as industrial floor panels.

### BACKGROUND

Recycling processes of low melt flow index (MFI) plastic waste has proven to be difficult in conventional processes. Over 40% of agri-plastic originates from plastic sheets made predominantly of polyethylene, that are spread over soil, for mulching, or used as temporary structures (*e.g*. greenhouses). Such plastic sheets have been thus far considered substantially non-recyclable, mainly due to the presence of contaminants, such as soil, fertilizers, pesticides, dust, etc., which can sometimes amount to up to 50% of the waste weight. Such contaminants can damage standard recycling equipment, and their removal is often problematic and expensive, making the recycling process complex and not cost-ineffective. Hence, such plastic waste is typically being burned-off Alternatively, the sheets are sent to landfills, in which the sheets are left untreated, and can breakdown over time to microplastic particles that can be spread by wind to other soil or water areas causing microplastic contamination. Either way, as such plastic sheets have not been recycled thus far, these remain a significant environmental concern and hazard.

Polyethylene and polypropylene grades used for manufacture of such sheets are typically characterized by having low MFIs, which makes them harder to process in conventional melting and extruding recycling processes applied on other types of plastic wastes. Further, polyethylene and polypropylene utilized for producing such sheets contain various functional additives (such as UV blockers, mechanical properties modifiers, plasticizers, *etc.*), which have significant impact on the properties of the sheets and can hamper application of various recycling processes. Hence, up to date, attempts to recycle these sheets focused mainly on shredding the sheets (typically after a complex and expensive process of removing undesired contaminants), pelletizing and pressure forcing for forming granulate-based compressed products, typically having inferior mechanical properties.

### GENERAL DESCRIPTION

The present disclosure provides processes for recycling agri-plastic waste, such as plastic sheets and plastic tubes or pipes, into high-strength products suitable for applications in constructions, *e.g*. as industrial floor panels or as cargo pallets, typically without substantive removal of particulate contaminants and/or non-organic particulate matter from the sheets, hence resulting in a cost-effective process.

Thus, by one of its aspects, the present disclosure provides a process for producing heavy-duty molded plastic panels from plastic waste, typically agri-plastic waste. The process comprises processing agglomerated granules of the plastic waste in a double-helix extruder to obtain a processed plastic melt; permitting the processed plastic melt to flow into one or more molds to at least partially fill the one or more molds; applying pressure onto the one or more molds to shape the plastic melt into one or more of shaped plastic panels; and extracting the one or more shaped plastic panels from the one or molds to obtain the heavy duty molded plastic panels. The agri-plastic waste utilized in this process is typically in the form of plastic sheets, and containing up to 20 wt% of non-organic particulate matter.

In the context of the present disclosure, the term *recycling* (or any lingual variation thereof) means to denote transformation of the plastic waste into a different physical form, having different mechanical properties than those of the plastic waste prior to application of the process. In other words, the process of this disclosure applies a combination of steps and conditions, transforming plastic waste, *e.g*. agri-plastic sheets, into heavy-duty plastic products. *Heavy-duty products* are products which are designed to withstand relatively large mechanical loads, typically compression forces, making them suitable for applications where large mechanical loads are expected to be applied, singularly, continuously or repeatedly, for example industrial floor boards/panels, loading or shipment pallets, *etc.*

Within the context of the present disclosure, the term *plastic waste* (or agri-plastic) refers to plastic sheets, pipes, tubes, *etc.,* utilized in agriculture, such as irrigation tubes, mulching plastic sheets, greenhouse plastic sheets, *etc.*

*Plastic sheets,* as used herein, are thin, pliable films of plastic, typically having a thickness of at most 20 micrometers (µm) (*e.g*. between about 5 and about 20 µm). By some embodiments, the plastic sheets are agri-plastic sheets. The term *plastic* means to denote a material or composition of matter, containing predominantly one or more polymers. The sheets can be single-layer, monolithic sheets (*i.e*. single layer made from a singular material or singular composition of matter), or can be a multilayer sheet.

The term *polymer* means to denote an organic macromolecule molecule constructed out of repeating structural units (building blocks). The term includes homopolymers, copolymers, such as for example, block, graft, random and alternating copolymers as well as terpolymers, further including their derivatives, combinations and blends thereof. In addition to the above the term includes all geometrical configurations of such structures including linear, block, graft, random, alternating, branched structures, and combination thereof. The term *block copolymer* is meant to encompass a polymer formed from two or more homo-polymer subunits (blocks) linearly linked by chemical bonds (i.e. the blocks are connected end-to-end). Block copolymers with two, three, four and multiple homo-polymer units are referred to as di-block, tri-block, tetra-blocks and multi-blocks respectively. The number of monomer types in a block co-polymer may be less than or equal to the number of blocks. Thus, an ABC linear tri-block consists of three monomer types, whereas an ABA linear tri-block consists of two monomer types.

Typically, the agri-plastic waste, *e.g*. the plastic sheets, are made of one or more thermoplastic polymers, *i.e.* one or more polymers which are heat processable. By some embodiments, the agri-plastic waste comprises at least 70 wt% of plastic, e.g. at least 75wt%, at least 80 wt% or even at least 85 wt% of plastic. By some embodiments, the plastic waste comprises (or is predominantly made of) polyethylene, polypropylene or any mixture, blend or copolymer thereof. According to other embodiments, the plastic waste, *e.g*. plastic sheets, comprises (or is predominantly made of) low-density polyethylene (LDPE), linear low-density polyethylene (LLDPE), high-density polyethylene (HDPE), low-density polypropylene (LDPP) or high-density polypropylene (HDPP), or any mixture, blend or copolymer thereof.

The phrase *predominantly made of* plastic means to denote agri-plastic waste having the majority components thereof being made of plastic. By some embodiments, the plastic waste comprises at least 70 wt% of plastic, e.g. at least 75wt%, at least 80 wt% or even at least 85 wt% of plastic.

According to some embodiments, the plastic waste further comprises, or is further mixed with, one or more additional sources of high-density polyethylene (HDPE), for example HDPE pipes or tubes.

By preferred embodiments, the plastic waste comprises LDPE and HDPE. In such embodiments, the plastic waste comprises LDPE in an amount ranging between about 50 wt% and 60 wt%, and HDPE in an amount ranging between about 30 wt% and 40 wt%.

While polymers are the main components of the plastic waste, the waste can comprise a variety of additives, such as UV blockers, pigments, antioxidants, plasticizers, stabilizers, fillers, *etc.*

As noted, the plastic waste are typically agri-plastic sheets, and are collected after use from the field. Therefore, the waste typically comprises various contaminants in particulate form, such as dust, soil, gravel, *etc.* Contrary to known recycling processes, the process of this disclosure does not require removal of these contaminants from the waste prior to application of the process, therefore significantly reducing the overall costs of the recycling process. Thus, by some embodiments, the plastic waste comprises up to 20 wt% of non-organic particulate matter (in other words, up to 20 wt% of the raw material used in the process are particles of non-organic matter which are carried by the agri-plastic sheets). By other embodiments, the plastic waste comprises between about 0.5 wt% and 20 wt% of non-organic particulate matter (out of the total weight of the plastic waste). As will be explained below, the non-organic particulate matter is utilized in the process of this disclosure for strengthening the resulting product, such that the non-organic particulate matter functions as a mechanical properties' modifier in the final heavy-duty product.

By some embodiments, the plastic waste can further comprise up to 20 wt% of organic particulate matter.

In the process of this disclosure, agglomerated granules are typically fed into the extruder. The agglomerated granules can be obtained by granulating particulate matter formed from said plastic sheets. The agglomeration process typically comprises application of sheering forces onto the particulate matter, in order to further reduce its size and obtain a relatively uniform size distribution of the agglomerates. Therefore, the process comprises, by some embodiments, forming agglomerated granules from particulate matter formed of said plastic waste prior to the step of processing within the extruder. By some other embodiments, the process also comprises processing the plastic waste into particulate matter prior to forming the granules.

In other words, plastic waste, *e.g*. in the form of plastic sheets, is first processed into particulate matter in order to reduce its size. Reduction of size can be carried out by any suitable means, for example by cutting, shredding, flaking, *etc.,* thereby obtaining small pieces, typically flakes, cuttings, shreddings, or any other form of particulate matter. By some embodiments, the particulate matter has an average flake size of no more than about 80 millimeters (mm). By other embodiments, the particulate matter can have an average flake size of between about 10 mm and about 80 mm.

The term *average size* refers to the arithmetic mean of measured diameters, wherein the diameters range ±25% of the mean when the flakes are approximately circular. In case the flakes are of non-circular or of irregular form, the term means to refer to the equivalent diameter, *i.e.* the longest linear dimension of the flake (*e.g.* width or length).

The particulate matter is agglomerated by any suitable technique, for example by wet agglomeration, thus obtaining substantially homogenous agglomerated granules, typically having an average particle size of between about 5 mm and about 50 mm. Agglomeration is carried out to provide a relatively homogenous granule size and composition, as well as assist in diminishing the size of the particles of the non-organic particulate matter present in the raw material and assist their distribution in the material.

The plastic waste can, at times, be provided moist or carrying some water or moisture as these are collected from fields and used without any cleaning or further process. Further, the agglomeration step can be carried out in the presence of water, and hence the agglomerates may contain some residual water. Thus, by some embodiments, the process can comprise drying the agglomerated granules before feeding into the extruder. According to some embodiments, the water content in the agglomerated granules does not exceed about 5% wt before feeding into the extruder.

By some embodiments, the agglomerated granules consist of at least one polymeric material originating from said plastic sheets, at most 20 wt% of non-organic particulate matter, and at most 5 wt% of water.

By some embodiments, the agglomerated granules are sieved prior to introduction into the extruder, for example to limit the granules to a size of no more than about 50 mm.

In the process of this disclosure, agglomerated granules of the plastic sheets are being fed to a double-helix extruder, in which these are processed under conditions permitting obtaining a processes plastic melt. By some embodiments, the plastic melt is characterized by having a melt flow index (MFI) value of at most 4 g/lOmin (at about 200°C). By some other embodiments, the plastic melt has an MFI value of between about 0.5 and 2 g/lOmin (at about 200°C).

Extrusion processes typically involve first obtaining a melt of the feed material, often under application of elevated temperatures and shearing conditions, and then force-flowing the melt through an outlet die. However, as the polymers from which the plastic sheets are typically made, *e.g*. high-density polyethylene/polypropylene, have low flowability properties, these are typically hard to process under regular extrusion conditions. Thus, in the processes of this disclosure, a double-helix extruder is used, in which the agglomerated granules can be exposed to high shear forces, higher than common extrusion processes. The *double helix* extruder includes two, oppositely rotating, helical shafts *(i.e.* extrusion screws), that apply shearing forces onto the plastic material fed thereinto, and continuously advance the material forward as it melts (due to elevated temperatures developing within the material during its shearing, as well as external heating). By utilizing a double helix structure, high shear forces are applied, enabling processing materials which have very low flow properties, such as polyethylene and polypropylene from which the agri-plastic sheets are made.

As the high shear forces cause generation of heat within the extruder, external heating can be minimized, thus contributing to reducing of overall energy that need to be invested in the process. Thus, by some embodiments, the conditions permitting obtaining said processes plastic melt comprises heating the agglomerated granules before and/or during feeding into the extruder. According to some embodiments, the temperature of the agglomerated granules upon entry to the extruder (namely the inlet temperature) is between about 40 and about 70 °C.

The extrusion step permits obtaining processed plastic melt. The term *melt* or *melt form,* used interchangeably, refers to a physical state of the polymers which is between a solid state and a liquid state, substantially without requiring addition solvent(s) or plasticizer(s). The processed plastic melt obtained from the extrusion step typically has low MFI value, *i.e.* at most 4 g/lOmin, more typically between about 0.5 and about 2 g/lOmin (at about 200°C). *Melt flow index* (MFI) is a measure denoting the ease of flow of a polymer melt under defined conditions. Namely, the lower the MFI value, the less flowable the polymer melt is. Unless otherwise specifically indicated, the MFI values provided herein are measured according to ASTM D1238 international standard (and/or ISO 1133).

By some embodiments, the process further comprising adding one or more fillers into the double-helix extruder during extrusion, typically in an amount of at most 10 wt% out of the total weight of the plastic melt. The one or more fillers, in addition to the non-organic particulate matter originating from the plastic waste, provides reinforcement of the plastic for obtaining improved mechanical properties.

By some embodiments, said one or more fillers can be selected from talc, coal ash (or fly ash), silicates, aluminates and mixtures thereof. By other embodiments, the said one or more fillers is selected from talc, fly ash, silica and alumina and mixtures thereof. By some other embodiments, the filler can be talc, fly ash or mixtures thereof.

The plastic melt is then permitted to flow into one or more molds, at least partially filling the molds. By some embodiments, the plastic melt is permitted to free-flow from the extruder into said one or more molds - in other words, the melt plastic is fed into the molds gravitationally, without applying forced feeding.

Alternatively, and preferably, the melt plastic is fed under pressure into said one or more molds. By some embodiments, the melt plastic can be collected into one or more magazines, typically heated magazines in order to maintain the melt in pliable form, and fed, under pressure, into the one or more molds from the magazines. According to some embodiments, the melt plastic is alternatingly fed into the magazines *(i.e.* fed into a first magazine, then into a second magazine, then into the first magazine, and so forth), and alternatingly or selectively fed into the one or more molds from said one or more magazines. Said selective or alternating feeding of melt plastic from the magazines into the one or more molds can be controlled by one or more flow valves.

Once within the mold, pressure is applied onto the mold to mold-shape the plastic melt into one or more shaped plastic panels. By some embodiments, a pressure of at least about 60 ton/kg *(i.e.* 60 tons per kilogram of melt plastic fed into the mold) is applied in order to obtain the panels. By some embodiments, the pressure applied onto the mold can be in the range of between about 60 ton/kg and 100 ton/kg. Pressure is applied by any suitable press known *per se,* for example a hydraulic press, and the mold is held under pressure for a sufficient time to permit flow of the melt polymer within the mold. For example, pressure can be applied for at least about 20 seconds (*e.g*. between about 20 and about 60 seconds). By other embodiments, the plastic melt resides within the mold for a period of time of between about 20 seconds and about 120 seconds before extraction.

Pressure can also be applied according to a pre-determined profile, *e.g*. various pressures can be applied during application of a pressing cycle, depending on the viscosity and/or flow properties of the melt, and the complexity of the mold.

By some embodiments, the mold comprises a bottom mold plate and a top mold plate configured for holding, and defining between them a space corresponding to the shape of the desired panel. Flowing the melt plastic into the mold plates and application of pressure thus shapes the melt plastic between the plates into the shape of the desired panel.

As the melt plastic has low MFI value, it is preferable, by some embodiments, to distribute the melt plastic within the mold at several locations within the mold, or feed the melt plastic simultaneously to different locations in the mold. Distribution of the melt plastic within the mold before application of pressure ensures complete filling of the mold when pressure is applied. For this purpose, according to some embodiments, the mold may comprise two or more mold inlets (*e.g.* 2, 3, 4, 5, 6, 7, 8 or even more inlets), for feeding the melt plastic into the mold in at least two different locations.

According to other embodiments, the mold may comprise a channeling arrangement, associated with one or both of the top mold plate and the bottom mold plate. The channeling arrangement comprises at least one feed inlet and two or more channels in fluid-communication with said at least two mold inlets for receiving the melt plastic and feeding it through the channels to the more mold inlets configured at said top mold plate and/or bottom mold plate. Hence, the channeling arrangement functions as a manifold for distributing the melt plastic within the mold.

By some embodiments, during application of pressure, the top mold plate is maintained at a temperature lower than that of the bottom mold plate.

Maintaining a temperature difference between the mold plates allows the top surface of the panel (*i.e.* corresponding to the top mold plate) to solidify or stabilize before the bottom face of the panel *(i.e.* corresponding to the bottom mold plate). Applicant has found that due to the limited flexibility of the panels and the relatively large size (and/or weight) of the panel, it is preferable to extract (*i.e*. peel-off) the panel from the top plate rather than extracting the panel that is at least partially embedded within the cavity of the bottom mold plate. Thus, by some embodiments, extracting comprises detaching the top mold plate from the bottom mold plate, followed by detaching the heavy-duty plastic panels from the top mold plate. The temperature difference between the top mold pate and the bottom mold plate can, by some embodiments, be at least about 25 °C. By some embodiments, the heavy-duty panel is extracted from the top mold plate at a temperature of between about 60 and about 90°C.

The process of this disclosure can be a continuous process, a semi-continuous process or batch-wise process. Preferably, the process is continuous.

Compared to production processes of standard heavy-duty panels, *e.g*. wooden panels (or pallets) or plastic panels weighing 25 Kg produced by standard injection molding techniques, the processes of this disclosure are favorable economically, as well as characterized in low CO₂ emission values (*e.g*. reduction of about 50% of CO₂ emission compared to production process of standard wooden pallets and more than about 55% reduction of CO₂ emission compared to production of plastic pallets by injection molding).

By another aspect, there is provided a process for producing heavy-duty molded plastic panels from agri-plastic waste, the agri-plastic waste being in the form of plastic sheets, the process comprising processing said agri-plastic waste into particulate matter; forming agglomerated granules from particulate matter obtained from said plastic sheets; processing said agglomerated granules in a double-helix extruder obtaining a processed plastic melt; permitting the processed plastic melt to flow into one or more molds to at least partially fill said one or more molds; applying pressure of at onto said one or more molds to shape the plastic melt into one or more of shaped plastic panels; and extracting said one or more shaped plastic panels from said one or molds to obtain said heavy-duty molded plastic panels; said agri-plastic waste containing up to 20 wt% of non-organic particulate matter.

By yet another aspect, there is provided a process for producing heavy-duty molded plastic panels from agri-plastic waste, the agri-plastic waste being in the form of plastic sheets, the process comprising processing said agri-plastic waste into particulate matter; forming agglomerated granules from said particulate matter; processing said agglomerated granules in a double-helix extruder obtaining a processed plastic melt; permitting the processed plastic melt to flow into one or more molds to at least partially fill said one or more molds; applying pressure onto said one or more molds to shape the plastic melt into one or more of shaped plastic panels; and extracting said one or more shaped plastic panels from said one or molds to obtain said heavy-duty molded plastic panels; said agri-plastic waste containing up to 20 wt% of non-organic particulate matter.

By another one of its aspects, the present disclosure provides a heavy-duty plastic panel produced from agri-plastic waste, typically from plastic sheets, according to a process disclosed herein.

By yet another aspect, there is provided a cargo pallet produced from agri-plastic waste, typically from plastic sheets, according to a process disclosed herein.

As used herein, the term *about* is meant to encompass deviation of ±10% from the specifically mentioned value of a parameter, such as temperature, pressure, concentration, etc.

Whenever a numerical range is indicated herein, it is meant to include any cited numeral (fractional or integral) within the indicated range. The phrases *ranging*/*ranges between* a first indicate number and a second indicate number and "ranging/ranges from" a first indicate number "to" a second indicate number are used herein interchangeably and are meant to include the first and second indicated numbers and all the fractional and integral numerals therebetween.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** shows a schematic representation of a process according to an embodiment of this disclosure.
**Figs. 2A-2B** show the plastic material after shredding of the raw plastic sheet material (Fig. 2A) and at melt state after extrusion (Fig. 2B).
**Fig. 2C** shows a stack of shipment pallets produced by a process according to an embodiment of this disclosure.
**Fig. 3** shows an exemplary mold for producing a heavy-duty panel according to an exemplary embodiment of this disclosure.
**Fig. 4** shows DSC analysis of agglomerated agri-plastic utilized in processes of this disclosure.
**Fig. 5** shows FTIR analysis of agglomerated agri-plastic utilized in processes of this disclosure.
**Fig. 6** shows ATR analysis of agglomerated agri-plastic utilized in processes of this disclosure.
**Fig. 7** shows ATR analysis of determination of ash analysis carried out on agglomerated agri-plastic utilized in processes of this disclosure.
**Figs. 8A-8D** show results of Von Mises analysis for a cargo pallet prepared according to a process of this disclosure: 1200Kg load, racking deflection (top and bottom views seen in Figs. 8A-8B, respectively) and Von Mises stress (top and bottom views seen in Figs. 8C-8D, respectively).
**Figs. 9A-9C** show results of Von Mises analysis for a cargo pallet prepared according to a process of this disclosure: 5000Kg stacking load: deflection (Fig. 9A) and Von Mises stress (top and bottom views seen in Figs. 9B-9C, respectively).

### DETAILED DESCRIPTION OF EMBODIMENTS

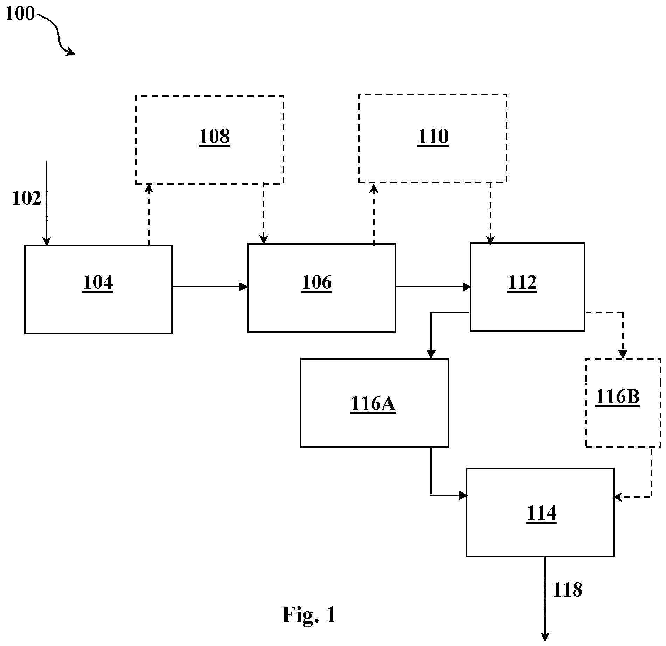

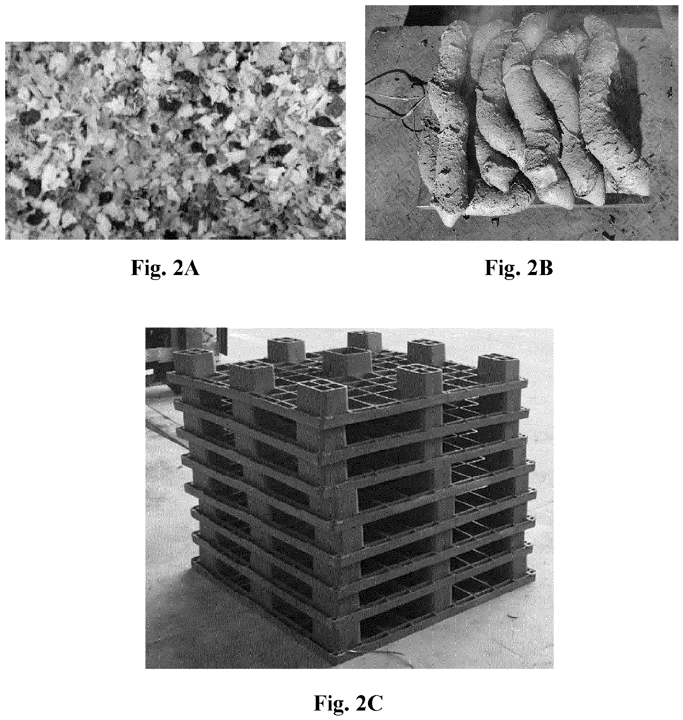

A schematic description of a process and a manufacturing facility according to an embodiment of this disclosure is shown in Fig. 1. In the process of Fig. 1, dashed lines represent optional process steps. Facility **100** includes shredding unit **104,** which is configured to receive a feed **102** of agri-plastic sheets, such as polyethylene and/or polypropylene sheets. The sheets are fed into the shredding unit as received, *i.e*. without removal of any contaminants (*e.g*. non-organic and organic matter) carried by the sheets. Shredding unit **104** shreds the plastic sheets into shreddings or flakes, typically with a size ranging between about 10 mm and 80 mm. The flakes can be seen in Fig. 2A. The flakes are fed into agglomeration unit **106,** for example a wet agglomerator, for obtaining agglomerated granules of average size ranging between about 5 mm and 50 mm. During granulation, blending of the plastic flakes is carried out, thus obtaining a more homogenous composition, as well as some reduction in the size of non-organic particulate matter. Optionally, albeit it not necessarily, the flakes can be dry cleaned or sieved in order to remove undesired large particulate matter, *e.g*. by dry treatment unit **108,** before transferring the flakes into agglomeration unit **106.**

The agglomerated granules are then optionally dried in drying unit **110,** in order to reduce their moisture content to below about 5 wt%, and then fed into double-helix extruder **112.** In the extruder, the granulated agglomerates undergo high shearing and high temperature conditions, slowly melting the agglomerates as the material advances along the extruder. The double-helix extruder permits development of high shear forces, higher than forces developing in standard extruders (for example single screw extruder), and hence also enables development of higher temperatures within the extruded material at relatively quicker rates. Thus, the utilization of the double helix extruder enables obtaining relatively efficient melting of the agglomerates at a relatively quick rate.

As the melt plastic is characterized by low MFI values, typically below 1.5 g/lOmin, the melt is allowed to flow out of extruder **112** and collected into one or more magazines **116A, 116B,** *e.g.* by vacuum, and fed from the magazines into the molding unit **114** under pressure (Fig. 2B). Magazine(s) **116** is(are) typically kept at elevated temperatures in order to prevent hardening of the melt plastic. In **114,** the melt is fed into molds and pressed under the desired conditions in order to obtain the heavy-duty plastic panel once extracted **(118)** out of the mold (Fig. 2C).

When more than one magazine **116** is utilized to temporarily store the melt plastic, feeding of the melt plastic from the magazines into the molds can be carrying out alternatingly *(i.e.* feeding from a first magazine, then from a second magazine, *etc.*), or selectively. Utilization of more than one magazine can reduce the cycle time for manufacturing a heavy-duty panel, as the magazines can be filled and emptied in a sequence according to the pressing rate of the press unit. In other words, utilizing two or more magazines can permit emptying one of the magazines into the mold, while concomitantly filling the other magazine, thereby rendering the other magazine ready for emptying in the next pressing cycle, and so on.

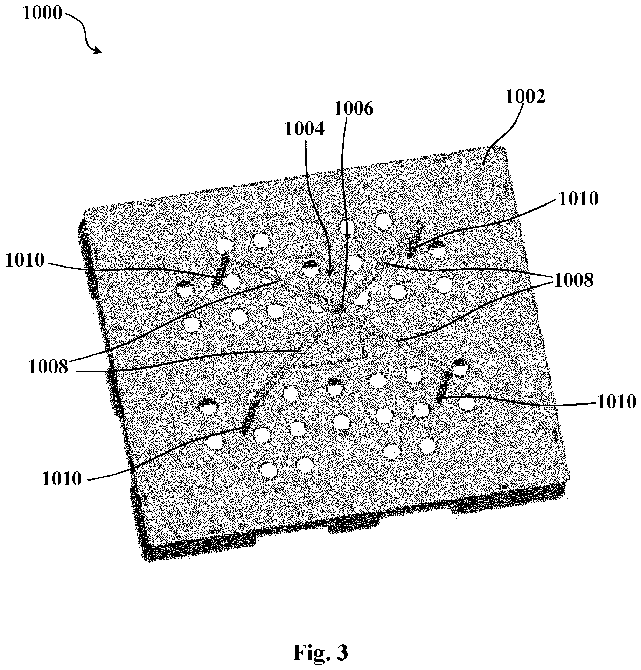

An exemplary mold for obtaining the heavy-duty panel is shown in Fig. 3. Exemplary mold **1000** is configured for receiving the melt plastic and distributing it within the mold via two or more mold inlets. As the melt plastic has low MFI value, such distribution of the feed of the melt plastic permits more effective and efficient filling of the mold at a relatively fast rate that is suitable for mass production of the heavy-duty plates. In the provided example, the top mold plate **1002** of mold **1000** is associated with a channeling arrangement, generally designated **1004.** It is, however, to be understood that channeling arrangement **1004** may be associated with the bottom mold plate or with both of the top and bottom mold plates (not shown). The channeling arrangement **1004** includes a feed inlet **1006** and a plurality of channels **1008** (four channels in this specific example). The channels **1008** are defined between the feed inlet **1006** and mold inlets **1010,** such that melt plastic can be received through feed inlet, typically under suitable pressure feed, and channeled through channels **1008** to mold inlets **1010,** thereby filling the mold, substantially simultaneously, through all of the mold inlets, thereby distributing the melt plastic in different locations in the mold. Such distribution within the mold enables to shorten the pressing cycle time, as well as obtaining an even distribution of residual stresses formed in the heavy-duty panel during pressing and after release of pressure.

### Characterization of cargo pallet prepared by the process

Cargo pallets were prepared according to a process described herein. The pallets were 1000mm× 1200mm× 150mm in size, with a total weight of 21 Kg. The products were statically and dynamically loaded.

The pallets withstood a static load of 5,000 kg, a dynamic load of 2,400 kg and racking load of 500 kg.

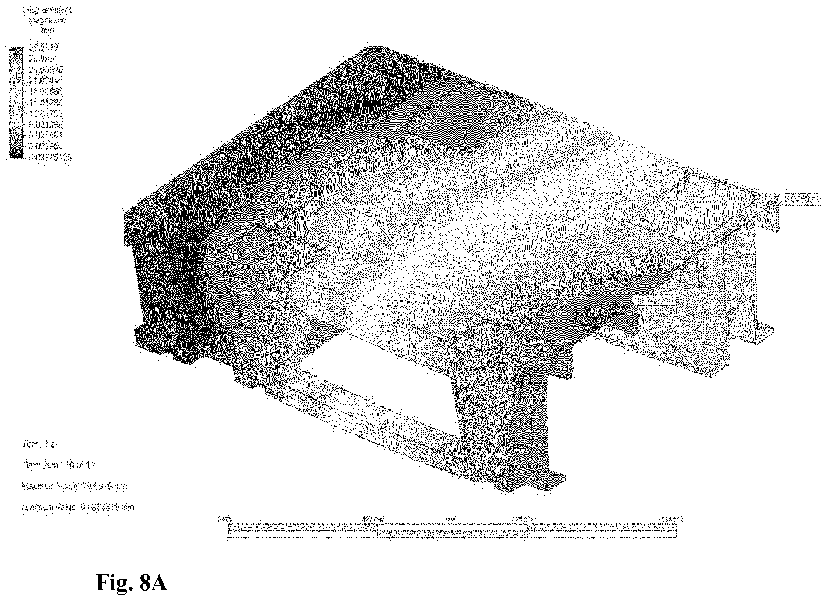

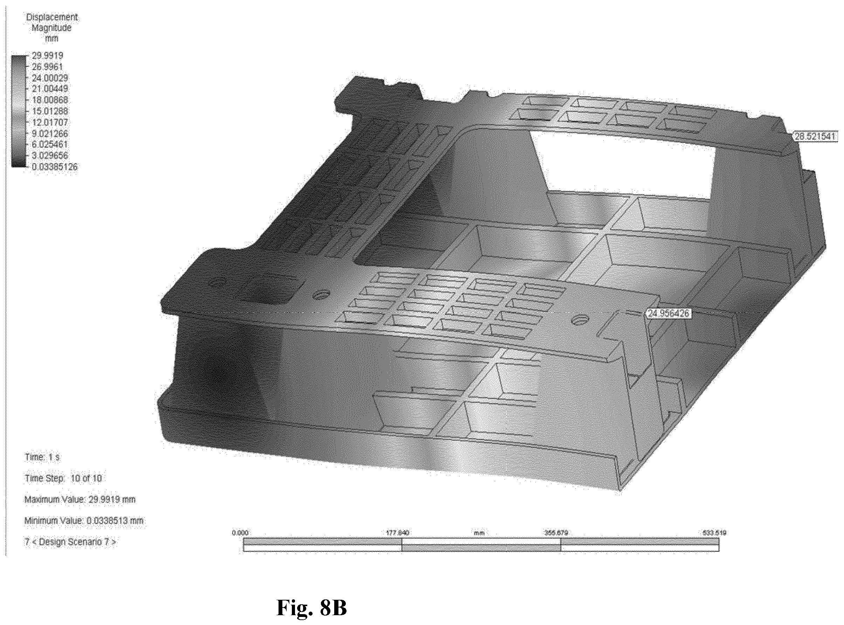

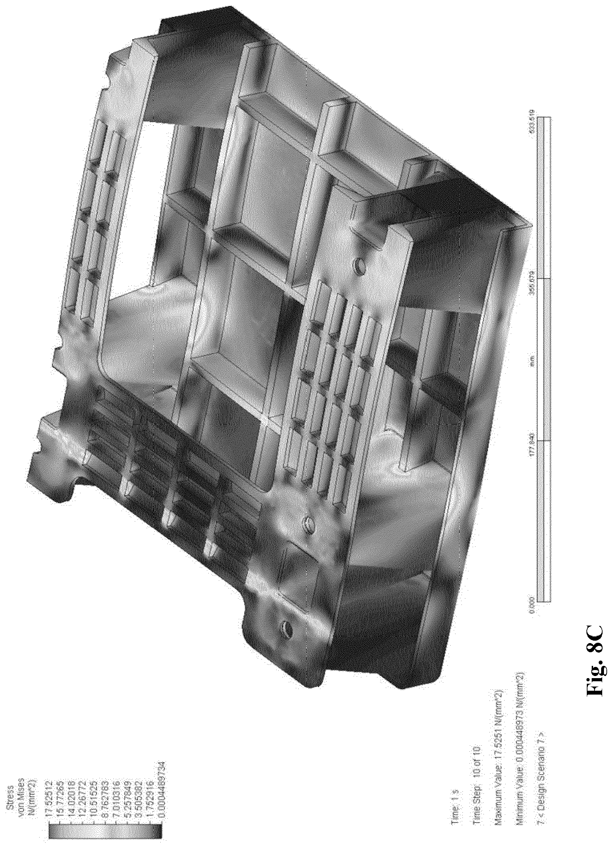

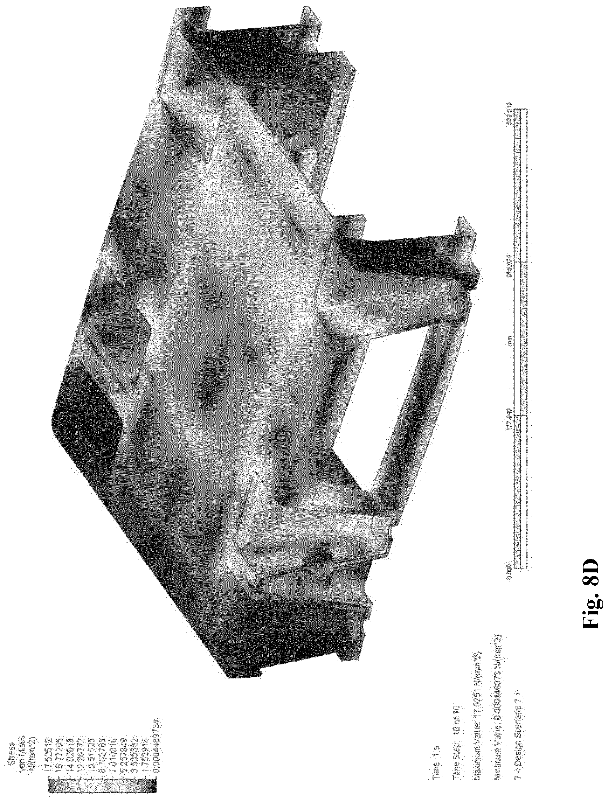

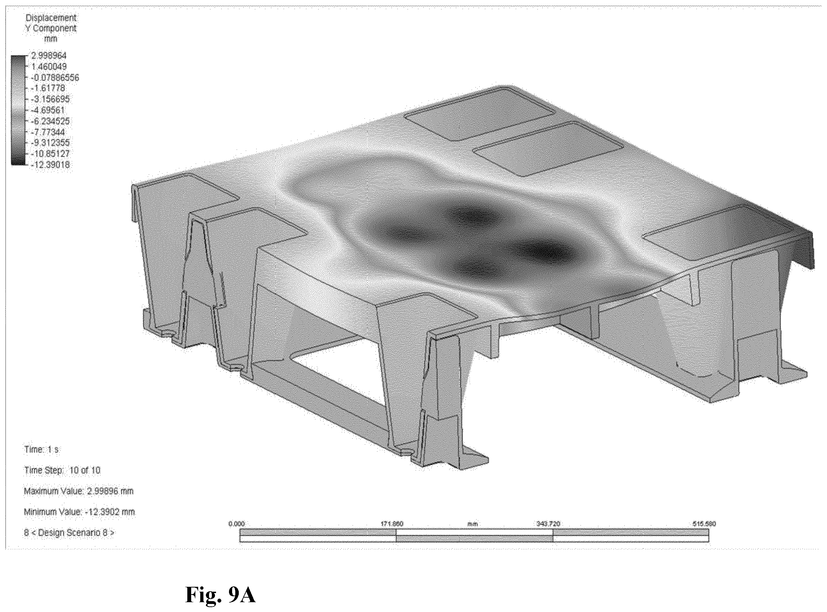

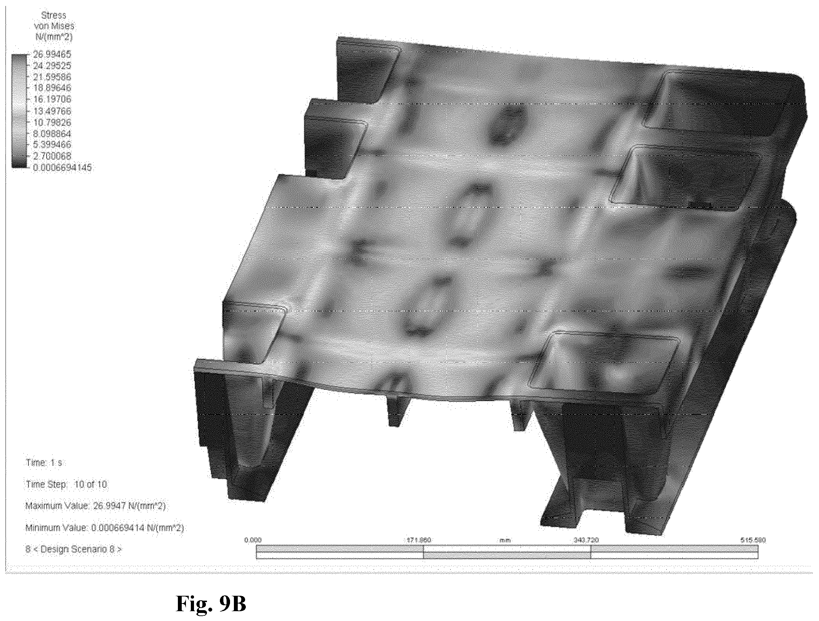

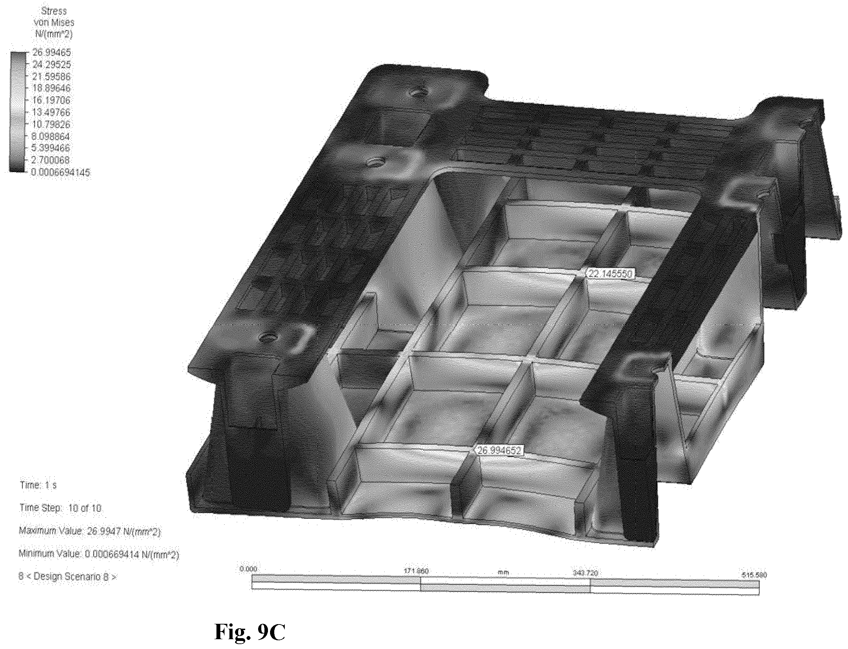

The results correlated to Von Mises analyses, under immediate elastic modulus of 700 MPa and yield stress of 20 MPa (distance between support legs 1000mm), as seen in Figs. 8A-9C. The Von Mises analysis showed that the pallets can withstand a load of 1,200 Kg with maximum deflection of 30mm for short periods of time under racking conditions. For on-ground loading, the pallets can withstand loads of 5,000 kg.

### Characterization of material

Samples of the plastic material were shredded into particles and characterized by various mechanical and chemical analyses.

### Mechanical properties

Standard mechanical properties test samples were prepared from the agglomerates according to standard ISO294 (Boy 22A, 22 tons, D=24mm, L/D=22) and compared to HDPE typically used in agriculture (HDPE 5502BN or HDPE B4600). The injection parameters are detailed in **Table 1.**

Izod impact tests were carried out according to the method of ASTM D256, using 7.5 J pendulum (Zwick, D-7900, type 5101). Tensile tests were carried out according to ISO527 1A at a load rate of 1 mm/min for determining the tensile modulus and at 50 mm/min for determining the strength and fracture properties (Testometric M500-50CT, 50kN load cell). Density was measured according to ISO1183 (Mettler Toledo). The mechanical test results are provided in **Table 2** (the agglomerated material designated "R1").

**Table 1: mechanical properties sample injection parameters**

| | | |
|---|---|---|
| Temperatures | T1: rear [°C] | 220 |
| | T2 [°C] | 220 |
| | T3 [°C] | 220 |
| | T4 [°C] | 220 |
| | T5: nozzle [°C] | 220 |
| | Tmold [°C] | 42 |
| Dosing | Material ratio [phr] | 100 |
| | Stroke [mm] | 79 |
| | Screw speed [rpm] | 150 |
| | Back pressure [bar] | 20 |
| | Dosing time [s] | 19 |
| Injection parameters | Injection speed [mm/s] | 150 |
| | Max. injection pressure[bar] | 70 |
| | Max. actual pressure [bar] | 71 |
| | Holding pressure [bar] | 40-60 |
| | Injection time [s] | 2.47 - 2.85 |
| | Holding P. time [s] | 0-20 |
| | Switch over point [mm] | 10 |
| | Cushion [mm] | 0.2-1.1 |
| Molding parameters | Cooling time [s] | 10 |
| | Cycle time [s] | 50 |
| | Full shot weight [g] | 27.8 |

**Table 2: Mechanical test results**

| **Property** | **Standard** | **R1** | **HPDE** |
|---|---|---|---|
| Tensile modulus (MPa) | ISO 527; 1 mm/min | 749 | 1,370^{∗∗} (5502BN) |
| Yield stress (MPa) | ISO 527; 50 mm/min | 20 | 27 (5502BN) |
| Stress to brake (MPa) | ISO 527; 50 mm/min | 9^{∗} | - |
| Yield strain (%) | ISO 527; 50 mm/min | 21 | - |
| Strain to brake (%) | ISO 527; 50 mm/min | 200^{∗} | 600 (5502BN) |
| Izod impact (J/m) | ASTM D256 | 511 | 150 (B4600) |
| Density (g/cm³) | ISO1183 | 0.97 | 0.955 (5502 BN) |

| | | | |
|---|---|---|---|
| ^{∗} relatively large standard deviation ^{∗∗} measured at bending mode | | | |

### Rheological properties

Rheological properties tests were carried out by a melt flow indexer (Wance testing machine) according to ISO 1133 at 230°C, 2.16kg weight. Results are provided in **Table 3** below.

**Table 3: Rheological test results**

| **Property** | **Standard** | **R1** | **HPDE** |
|---|---|---|---|
| Melt volume flow rate (MVR) (cm³/10min) | ISO 1133 | 1.1 | - |
| MFI (g/10min) | ISO 1133 | 0.7 | 0.35 |

### Chemical and thermal analysis

Samples were tested to evaluate their chemical composition and thermal analysis. Differential scanning calorimetry (DSC) was carried out according to ISO11357, using modulated DSC600 (Perkin Elmer), at a temperature scan rate of 10°C/min, according to the profile: -30°C→320°C→0°C→320°C. FTIR and ATR (attenuated total reflection) analysis was carried out using Spectrum 2 FTIR analyzer (Perkin Elmer). Filler content was evaluated by determination of ash test at 600°C, as per ISO3451.

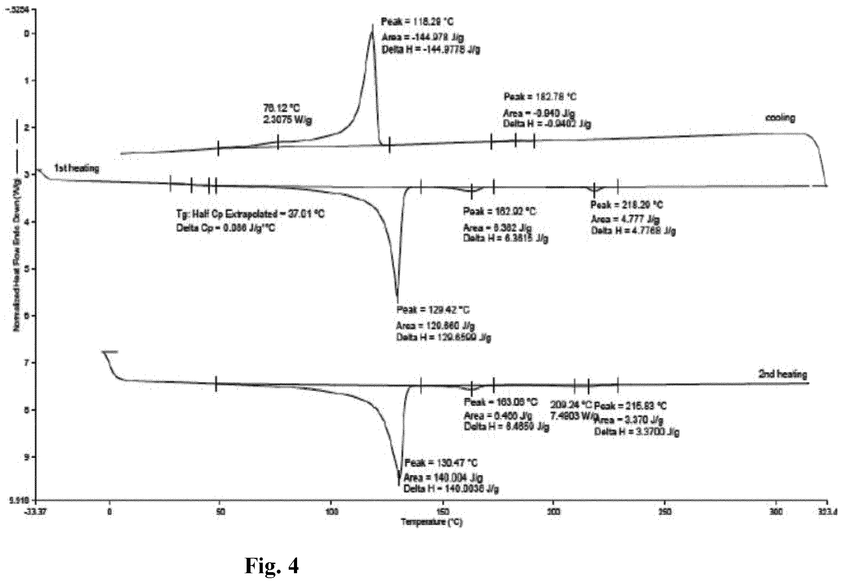

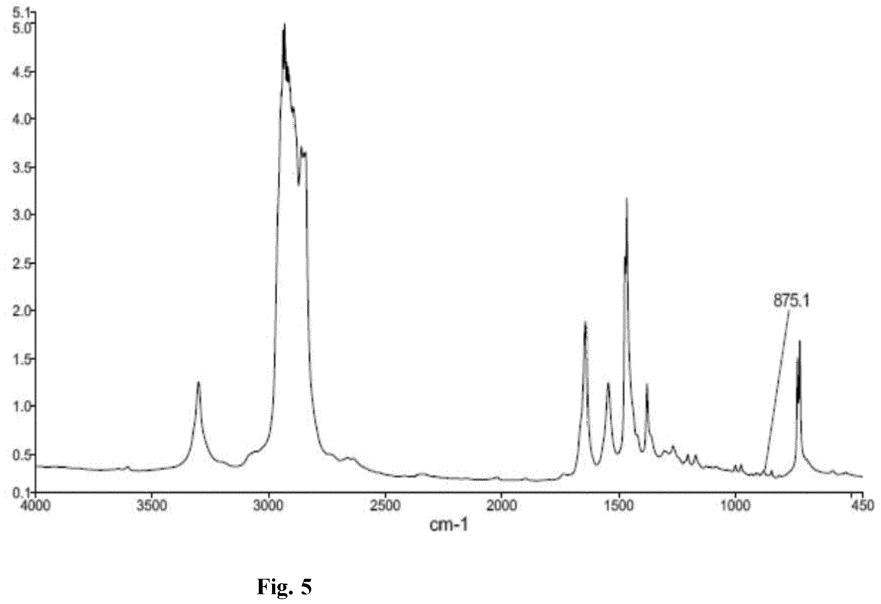

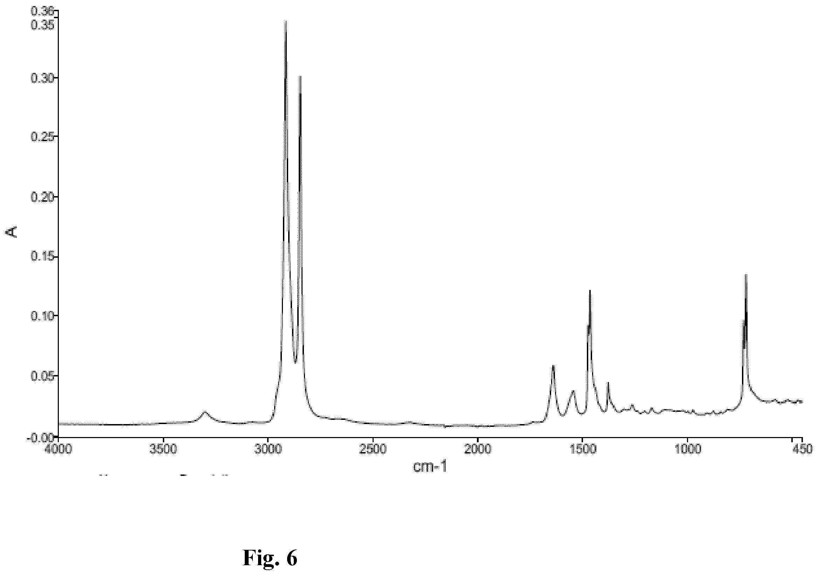

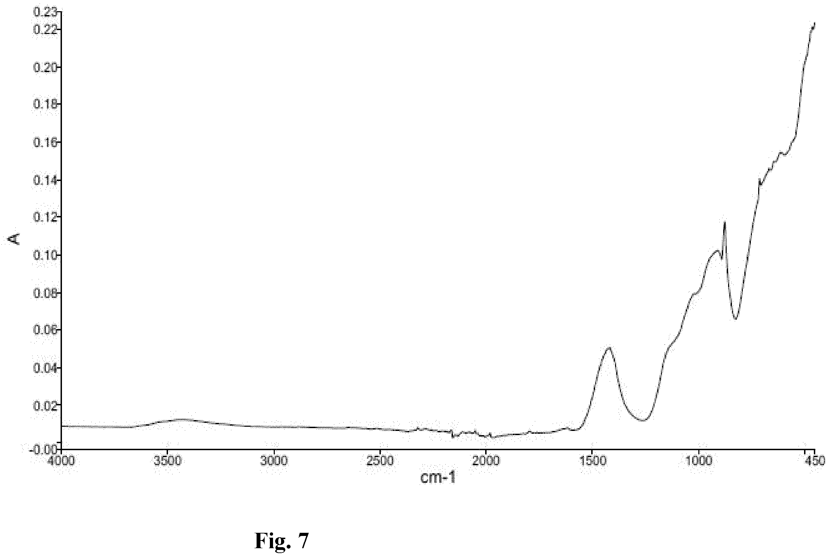

DSC test results, FTIR spectrum and ATR spectrum are shown in **Figs. 4-6****,** respectively. ATR spectrum of the ash remaining after determination of ash test is shown in Fig. 7.

The test results show that the material contained predominantly polyethylene (HDPE), with residual amounts of polypropylene (PP), polyamide (PA6) and calcium carbonate, together with trace amounts of titanium dioxide. Quantitative analysis showed a composition of about 84% HDPE, 10% PP, 2% PA6, and 4% inorganic material - mainly calcium carbonate and titanium dioxide.

## Claims

1. A process for producing heavy-duty molded plastic panels from agri-plastic waste, the agri-plastic waste being in the form of plastic sheets, the process comprising:
processing agglomerated granules obtained from said plastic sheets in a double-helix extruder obtaining a processed plastic melt,
permitting the processed plastic melt to flow into one or more molds to at least partially fill said one or more molds,
applying pressure onto said one or more molds to shape the plastic melt into one or more of shaped plastic panels, and
extracting said one or more shaped plastic panels from said one or molds to obtain said heavy-duty molded plastic panels,
said agri-plastic waste containing up to 20 wt% of non-organic particulate matter.

2. The process of claim 1, wherein said plastic melt has a melt flow index (MFI) value of at most about 4 g/lOmin (measured at about 200°C), optionally of between about 0.5 and 2 g/lOmin (measured at about 200°C).

3. The process of claim 1 or 2, wherein the pressure applied onto said one or more molds is at least about 60 ton/kg.

4. The process of any one of claims 1 to 3, wherein said agri-plastic waste comprise polyethylene or polypropylene, optionally wherein said plastic waste comprise low-density polyethylene (LDPE), linear low-density polyethylene (LLDPE), high-density polyethylene (HDPE), low-density polypropylene (LDPP) or high-density polypropylene (HDPP), or any mixture, blend or copolymer thereof.

5. The process of any one of claims 1 to 4, wherein said agri-plastic waste is further mixed with one or more additional sources of high-density polyethylene (HDPE), optionally wherein said one or more additional sources of HDPE is HDPE pipes or tubes.

6. The process of claim 4 to 5, wherein said agri-plastic waste comprises LDPE and HDPE, optionally wherein the plastic waste comprises LDPE in an amount ranging between about 50 wt% and 60 wt%, and HDPE in an amount ranging between about 30 wt% and 40 wt%.

7. The process of any one of claims 1 to 6, further comprising adding one or more fillers into the double-helix extruder during extrusion, optionally wherein said one or more fillers are added in an amount of at most 10 wt% out of the total weight of the plastic melt.

8. The process of any one of claims 1 to 7, comprising, prior to said processing, forming said agglomerated granules from particulate matter formed of said agri-plastic waste.

9. The process of claim 8, comprising processing said agri-plastic waste into said particulate matter prior to forming said granules, optionally wherein the particulate matter of agri-plastic waste having an average flake size of no more than about 80 mm.

10. The process of any one of claims 1 to 9, comprising drying the agglomerated granules before feeding into the extruder, optionally wherein the water content in the agglomerated granules does not exceed about 5% wt before feeding into the extruder.

11. The process of any one of claims 1 to 10, wherein the plastic melt is permitted to free-flow from the extruder into said one or more molds.

12. The process of any one of claims 1 to 10, wherein the plastic melt is pressure-fed into said one or more molds.

13. The process of any one of claims 1 to 12, wherein the melt plastic is permitted to flow into the mold at several locations defined within the mold, the mold comprises two or more mold inlets configured for feeding the melt plastic into the mold in at least two different locations, optionally wherein the mold is associated with a channeling arrangement for channeling the melt plastic into the mold.

14. The process of any one of claims 1 to 13, wherein said one or more molds comprise a bottom mold plate and a top mold plate configured for holding and shaping between them said processed plastic melt, and wherein during said application of pressure the top mold plate being maintained at a temperature lower than that of the bottom mold plate, optionally wherein said extracting comprises detaching the top mold plate from the bottom mold plate, and detaching the heavy duty plastic panels from the top mold plate and the temperature difference between the top mold plate and the bottom mold plate is of at least about 25 °C.

15. The process of any one of claims 1 to 14, wherein the processed plastic melt resides within the mold for a period of time of between about 20 and about 120 second before extraction.

16. The process of any one of claims 1 to 15, wherein extrusion is carried out at an inlet temperature of between about 40 and about 70 °C.
